# EUROPÄISCHE PATENTSCHRIFT

(11) **EP 4 330 655 B1**
(45) Veröffentlichungstag und Bekanntmachung des Hinweises auf die Patenterteilung: **29.01.2025**
(21) Anmeldenummer: 22727047.7
(22) Anmeldetag: 29.04.2022
(51) Int. Cl.: G01N 21/17

(54) **PHOTOAKUSTISCHER GASSENSOR UND VERFAHREN ZUR HERSTELLUNG**
PHOTOACOUSTIC GAS SENSOR, AND METHOD FOR PRODUCING SAME
CAPTEUR DE GAZ PHOTOACOUSTIQUE ET PROCÉDÉ DE FABRICATION

(30) Priorität: 29.04.2021 DE 102021111012
(43) Veröffentlichungstag der Anmeldung: 06.03.2024
(73) Patentinhaber: Technische Universität Dortmund, 44227 Dortmund (DE)
(72) Erfinder: PALZER, Stefan, 44227 Dortmund (DE)
(74) Vertreter: Michalski Hüttermann & Partner Patentanwälte mbB
(86) Internationale Anmeldenummer: PCT/EP2022/061598
(87) Internationale Veröffentlichungsnummer: WO 2022/229447

(56) Entgegenhaltungen:
- US-B1- 6 344 647

## Beschreibung

Die Erfindung betrifft einen photoakustischen Gassensor für ein Zielgas.

Weiterhin betrifft die Erfindung ein Verfahren zum Herstellen eines photoakustischen Gassensors für ein Zielgas.

Ein Gassensor ist ein Sensor zur Detektion gasförmiger Substanzen - sprich zur Detektion des Zielgases. Der Anteil des Zielgases im zu untersuchenden Gas, also eine chemische Information, wird vom Gassensor in ein elektrisches Signal umgewandelt. Viele Möglichkeiten der Umsetzung der chemischen Information in das elektrische Signal sind bekannt, wodurch sich auch Vor- und Nachteile unterschiedlicher Sensortypen ergeben.

Beim resistiven Prinzipien beeinflusst das Zielgas direkt die Leitfähigkeit einer gasempfindlichen Sensorschicht, die beispielsweise von einem anorganischen Metalloxid-Halbleiter (MOX) gebildet wird. Vorteile dieses Messprinzips ist die Möglichkeit der mikromechanischen Fertigung sowie eine hohe Empfindlichkeit. Nachteilig daran ist allerdings ein durch Alterung bedingter Drift im Sensorsignal sowie eine geringe Selektivität.

Ein Verfahren mit sehr hoher Selektivität, Langzeitstabilität und Reproduzierbarkeit stellt hingegen die nicht-dispersive Infrarotspektroskopie (NDIR) bereit. Ein NDIR-Aufbau besteht im Wesentlichen aus einer spektral breitbandigen Lichtquelle, einem optischen Weg und einem Photodetektor, dessen spektrale Antwort mittels geeigneter spektraler Filter eingegrenzt wird. Problematisch ist allerdings, dass die gegenwärtigen NDIR-Aufbauten keine Herstellung in Mikrosystemtechnik erlauben, da die Empfindlichkeit im Wesentlichen vom optischen Weg bestimmt wird.

Eine Möglichkeit die Bauweise zu verkleinern bietet die photoakustische Spektroskopie (PAS), mit der sich Gase sehr genau und selektiv nachweisen lassen. Das grundsätzliche Messprinzip ist wie folgt: Bestrahlt man eine zu untersuchende Gasprobe in einer Messzelle mit einer gepulsten Lichtquelle, so absorbieren die Gasmoleküle das Licht und die Gasprobe erwärmt sich. Bei konstanter Volumengröße der Messzelle entstehen dadurch akustische Wellen, deren Frequenz mit der Modulationsfrequenz der Lichtquelle übereinstimmt. Diese akustischen Wellen, sprich das photoakustische Signal, kann mit schallempfindlichen Elementen (z. B. Mikrofonen) detektiert werden. Die Signalamplitude korreliert mit der Stärke der Absorption und gibt somit Aufschluss über die Gaskonzentration in der Messzelle. Aufgrund des Aufbaus ist kein Photodetektor notwendig.

Die Publikation Chem. Eng. Technol. 2018, 41, No. 4, 696-701 - "Real-Time Gas Quality Data for On-Demand Production of Biogas" - beschreibt einen Gassensor, der auf dem photoakustischen Messprinzip basiert und zur Detektion von Methan als auch Kohlendioxid geeignet ist.

Die Herstellungsverfahren der bekannten photokustischen Gassensoren basieren auf der Verwendung mehrerer Wafer, die mittels Schweiß-, Löt- und/oder anodischer Verbindungsprozesse miteinander verbunden werden. Aufgrund der herstellungsbedingter Verbindungstellen ist die Robustheit sowie auch die Miniaturisierung der bekannten photakustischen Gassensoren beschränkt. Zudem ist das Herstellungsverfahren mit erhöhtem Aufwand sowie Kosten verbunden. US 6 344 647 B1 beschreibt einen solchen aus mehreren Wafern aufgebauten photoakustischen Gassensor.

Es ist daher Aufgabe der Erfindung ein Herstellungsverfahren bereitzustellen, das den Herstellungsprozess von photoakustischen Gassensoren vereinfacht. Insbesondere soll ein Verfahren bereitgestellt werden, das nicht erfordert, mehrere Wafer miteinander zu verbinden. Zudem ist es Aufgabe der Erfindung einen robusten photoakustischen Gassensor bereitzustellen, der zudem eine kostengünstige Fertigung erlaubt.

Diese Aufgabe wird durch den Gegenstand der unabhängigen Ansprüche gelöst. Bevorzugte Weiterbildungen der Erfindung sind in den Unteransprüchen beschrieben.

Erfindungsgemäß wird somit ein Verfahren gemäß Anspruch 1 zum Herstellen eines photoakustischen Gassensors für ein Zielgas bereitgestellt.

Erfindungsgemäß wird zudem ein photoakustischer Gassensor gemäß Anspruch 10 für ein Zielgas bereitgestellt.

Kernidee der Erfindung ist, dass der photoakustische Gassensor ausgehend von genau einem Wafer aus Silizium hergestellt wird. Der Wafer, der im ersten Schritt des Verfahrens bereitgestellt wird, weist dabei die vergrabenen Isolationsschicht auf. Unter einer vergrabenen Isolationsschicht ist eine Schicht im Inneren des Silizium-Wafers zu verstehen, die parallel zur Vorderseite und zur Rückseite des Wafers verläuft und die nicht aus Silizium ist. Stattdessen umfasst die vergrabene Isolationsschicht ein Material, das bevorzugt in Ätzverfahren als Ätzstopp fungiert. Beim Verfahren wird ausgehend von dem genau einen Wafer auf der Vorderseite und auf der Rückseite des Wafers jeweils eine Kavität realisiert. Derart entstehen zwei Kavitäten, die voneinander durch die vergrabene Isolationsschicht getrennt sind. Die erste Kavität bildet dabei das Messvolumen des Gassensors und ist von dem zu untersuchenden Gas und/oder Gasgemisch durchströmbar. Das schallempfindliche Element, das die zweite Kavität umfasst, dient als Detektionsvorrichtung. In der zweiten Kavität ist die gleiche Gasspezies wie dasjenige Gas, das mit dem Gassensor detektiert werden soll - sprich das Zielgas - eingeschlossen. Die zweite Kavität ist also nicht von Gas durchströmbar. Es handelt sich beim Gassensor also um einen für das Zielgas spezifischen Sensor. In anderen Worten ist das Zielgas diejenige Gasspezies, dessen Vorhandensein und/oder Anteil in einem zu untersuchenden Gas und/oder Gasgemisch mit dem Gassensor detektiert werden soll. Mit Gassensor für ein Zielgas ist also beispielsweise ein Gassensor für CO₂ gemeint, was einerseits bedeutet, dass der Gassensor CO₂ in einem zu untersuchenden Gas und/oder Gasgemisch, das die erste Kavität durchströmt, detektieren kann und bevorzugt den Anteil des CO₂ in dem Gas und/oder Gasgemisch bestimmen kann und andererseits auch bedeutet, dass CO₂ in der zweiten Kavität des Gassensors eingeschlossen ist.

Zudem kann es sich beim Zielgas, das in der zweiten Kavität eingeschlossen ist, auch um ein Gasgemisch handeln also ein Gasgemisch, das mehr als eine Gasspezies umfasst. Beispielsweise kann es sich beim Zielgas um eine Mischung aus CO₂ und Methan handeln. Derart wird ein Gassensor bereitgestellt, der spezifisch für die im Gasgemisch vorkommenden mehreren Gasspezies ist, also bei dem vorliegenden Beispiel ein Gassensor für CO₂ und Methan.

In Bezug auf die vergrabene Isolationsschicht ist besonders bevorzugt vorgesehen, dass die vergrabene Isolationsschicht einen Transmissionsgrad von wenigstens 40 % für elektromagnetische Strahlung einer Wellenlänge, die zur Detektion des Zielgases verwendet wird, aufweist. Am Beispiel eines Gassensors für CO₂ bedeutet dies folgendes: Da CO₂ unter anderem eine Schwingungsbande bei ungefähr 2380 bis 2320 cm⁻¹ (ungefähr 4200 nm bis 4300 nm) aufweist, kann Strahlung dieser Wellenlänge für die Detektion von CO₂ eingesetzt werden. Somit ist bevorzugt für das Beispiel des CO₂ Sensors vorgesehen, dass der Transmissionsgrad der vergrabenen Isolationsschicht 40% für Strahlung bei ungefähr 2380 bis 2320 cm⁻¹ ist. Bei einem Gassensor, der für mehrere Gasspezies spezifisch ist, sprich das Zielgas ein Gasgemisch umfassend mehrere Gasspezies ist, ist bevorzugt vorgesehen, dass die vergrabene Isolationsschicht einen Transmissionsgrad von wenigstens 40 % für elektromagnetische Strahlung derjenigen Wellenlängen, die zur Detektion der mehreren Gasspezies des Zielgases verwendet werden, aufweist.

In Bezug auf das erfindungsgemäße Herstellungsverfahren findet also kein Verbindungsprozess zwischen mehreren Wafern statt. Insbesondere sieht das Verfahren nicht vor, die erste Kavität und die zweite Kavität miteinander zu verbinden. Stattdessen wird ausgehend von dem einen Wafer, der in seinem Inneren die vergrabene Isolationsschicht aufweist, durch Abtragung von Material die erste und die zweite Kavität realisiert. Insbesondere fungiert die vergrabene Isolationsschicht während der Herstellung der ersten und der zweiten Kavität mittels Ätzverfahren als Ätzstopp, so dass die erste und die zweite Kavität nach Durchführung der Schritte b) und c) lediglich noch durch die vergrabene Isolationsschicht voneinander getrennt sind. Die vergrabene Isolationsschicht bildet in dem durch das Verfahren hergestellten Gassensor also eine Trennstruktur zwischen der ersten Kavität und der zweiten Kavität. Zugleich bildet die vergrabenen Isolationsschicht in dem durch das Verfahren hergestellten Gassensor ein optisches Fenster zwischen der ersten Kavität - dem Messvolumen - und der zweiten Kavität - der Detektionsvorrichtung.

Das Verfahren sieht im Wesentlichen drei Schritte vor. Im ersten Schritt a) wird der Wafer bereitgestellt. Bei dem Wafer handelt es sich um einen Silizium Wafer. Dabei ist es möglich, dass es sich um einen monokristallinen oder polykristallinen Wafer handelt. Der Wafer weist bevorzugt eine Scheibenform und/oder eine ebene Vorderseite und eine dazu parallele, ebene Rückseite auf. Bevorzugt weist der Wafer eine Dicke zwischen 0,5 und 2 mm auf. Wie bereits erwähnt weist der Wafer die vergrabenen Isolationsschicht im Inneren des Siliziums auf. Der Wafer weist also in einem Schnitt senkrecht zur Ebene folgende Schichtstruktur auf: Silizium - vergrabene Isolationsschicht - Silizium. Silizium als Wafermaterial hat den Vorteil, dass es für elektromagnetische Strahlung im IR Bereich von mehr al 1, 1 µm optisch transparent ist.

Im zweiten Schritt b) wird auf der Rückseite des Wafers der aufgehängte thermische Emitter umfassend die erste Kavität realisiert. Der thermische Emitter ist bevorzugt an Stegen aufgehängt und über die Stege mit dem Wafer verbunden. Bevorzugt wird zur Realisierung der Stege und des thermischen Emitters das Silizium des Wafers durch Ätzprozesse entfernt, wodurch zugleich die erste Kavität entsteht.

Im dritten Schritt c) wird auf der Vorderseite des Wafers das schallempfindliche Element realisiert. Das schallempfindliche Element umfasst die zweite Kavität. In der zweiten Kavität ist das Zielgas eingeschlossen. Wenn beispielsweise ein Gassensor für Methan hergestellt wird, ist in der zweiten Kavität also Methan eingeschlossen.

Die Schritte b) und c) können auch in umgekehrter Reihenfolge durchgeführt werden. Es ist also möglich erst auf der Vorderseite des Wafers das schallempfindliche Elemente zu realisieren und danach auf der Rückseite des Wafers den aufgehängten thermischen Emitter zu realisieren. Die Schritte b) und c) werden mittels fotolitografischer Verfahren und Ätzverfahren umgesetzt. Dabei handelt es sich um Verfahren die in der Herstellung von Komponenten der Mikrosystemtechnik üblich sind.

Die Fotolithografie ist ein zentrales Verfahren der Halbleiter- und Mikrosystemtechnik zur Herstellung von integrierten Schaltungen und weiteren Komponenten. Dabei wird mit Hilfe eines Belichtungsprozesses ein Bild einer Fotomaske auf einen lichtempfindlichen Fotolack übertragen. Anschließend werden die belichteten Stellen des Fotolacks aufgelöst. Alternativ kann auch vorgesehen sein, dass die unbelichteten Stellen des Fotolacks aufgelöst werden, wenn der Fotolack unter Licht aushärtet. Derart entsteht eine lithografische Maske, die die weitere Bearbeitung durch chemische und physikalische Prozesse ermöglicht, etwa das Einbringen von Material in die offenen Fenster oder das Ätzen von Vertiefungen unter den offenen Fenstern.

Bei chemischen und physikalischen Ätzverfahren, bespielweise reaktives Ionenätzen, Plasmaätzen oder nasschemischen Verfahren wie das Ätzen von Silizium mit Kalilauge werden physikalische und/oder chemische Vorgänge genutzt, die zu einem Abtragungsprozess von Material führen.

Das erfindungsgemäße Verfahren erlaubt somit ausgehend von genau einem Wafer den photoakustischen Gassensor mit einem monolithischen Aufbau herzustellen, was den Gassensor sehr robust macht. Zudem wird das Herstellungsverfahren stark vereinfacht, weil auf das Verbinden von mehreren Wafern verzichtet werden kann. Weitere Vorteile des Verfahrens bestehen in der Möglichkeit der Miniaturisierung des photoakustischen Gassensors sowie in der Möglichkeit durch Massenfertigung die Herstellungskosten weiter zu reduzieren.

Bevorzugt ist vorgesehen, dass mit dem Verfahren Gassensoren hergestellt werden können, die Abmessungen von unter 2 mm aufweisen. Ebenfalls ist bevorzugt vorgesehen, dass der Gassensor Abmessungen von unter 2 mm aufweist. Es handelt sich also bevorzugt um ein Herstellungsverfahren für mikromechanische Gassensoren bzw. um einen mikromechanischen Gassensor.

Wie bereits erwähnt handelt es sich um einen photakustischen Gassensor. Vom Messprinzip macht sich der photoakustische Gassensor zunutze, dass Gasmoleküle nur elektromagnetische Strahlung ganz bestimmter Wellenlängen absorbieren. Welche dies sind, hängt von der Gasspezies ab. Die Absorption wird bei photoakustischen Messungen mittels eines Druckumformers über die aus der Absorption resultierende Druckerhöhung gemessen. Zudem wird durch Bereitstellen des Zielgases in der zweiten Kavität die nachzuweisende Gasspezies selbst als gasselektiver Detektor eingesetzt. Es ist daher kein Photodetektor für elektromagnetische Strahlung notwendig. Zum Nachweis einer bestimmten Gasspezies - sprich dem Zielgas - in einem zu untersuchenden Gas und/oder Gasgemisch wird elektromagnetische Strahlung verwendet, deren Wellenlänge vom Zielgas absorbiert werden kann. Bevorzugt ist vorgesehen, dass der thermische Emitter dazu ausgestaltet ist, elektromagnetische Strahlung in einer Wellenlänge zu emittieren, die vom Zielgas absorbiert werden kann. Zudem kann im Hinblick auf das Emissionsspektrum des thermischen Emitters vorgesehen sein, dass das Emissionsspektrum des thermischen Emitters beispielsweise durch photonische Kristalle an das Absorptionsspektrums des Zielgases angepasst ist.

Die durch die Absorption verursachte Druckerhöhung lässt sich in der zweiten Kavität mit dem schallempfindlichen Element als Schallwelle messen. Befindet sich im zu untersuchenden Gas oder Gasgemisch, das die erste Kavität durchströmt, ebenfalls Zielgas wird schon ein Teil der vom thermischen Emitter emittierten elektromagnetischen Strahlung vom Zielgas im zu untersuchenden Gas bzw. Gasgemisch absorbiert, was Auswirkungen auf die in der zweiten Kavität gemessene Schallwelle hat. Bei einem Zielgas, das mehrere Gasspezies umfasst, können beispielsweise über unterschiedliche Modulationsfrequenzen des thermischen Emitters für die unterschiedlichen Gasspezies des Zielgases die Signale voneinander unterschieden werden.

In Bezug auf das Herstellungsverfahren und in Zusammenhang mit Schritt a) ist gemäß einer bevorzugten Weiterbildung der Erfindung vorgesehen, dass in Schritt a) ein Silicon-on-Insulator Wafers und/oder ein {100}Si-Wafers bereitgestellt wird. Bei einem Silicon-on-Insulator Wafer (SOI-Wafer) handelt es sich um einen Wafer, bei dem eine dünne Siliziumschicht durch eine elektrisch isolierende Schicht (BOX, *englisch buried-oxide*) vom Silizium-Substrat des Wafers getrennt ist. Der SOI-Wafer weist also durch die BOX-Schicht die vergrabene Isolationsschicht auf.

Bei einem {100}Si-Wafers handelt es sich um einen Wafer, bei dem die Vorderseite und die Rückseite des Wafers von jener Kristallebene gebildet wird, die mit den Millerschen Indizes {100} bezeichnet wird. Die Orientierung der Kristallebene hat Einfluss auf die Form der Strukturen, die durch chemische Ätzverfahren im Wafer hergestellt werden. Beim chemischen Ätzen eines {100}Si-Wafers, entstehen zunächst trapezförmige Gräben. Die schrägen Seitenwände der Gräben werden von den {111}Si-Flächen gebildet, die eine geringe Ätzrate aufweisen als die {100}Si-Flächen. Durch Bereitstellen des {100}Si-Wafers kann somit besonders einfach der thermische Emitter und das schallempfindliche Element realisiert werden.

Besonders bevorzugt ist gemäß einer weiteren Weiterbildung der Erfindung vorgesehen, dass der in Schritt a) bereitgestellte Wafer auf der Rückseite eine erste Isolationsschicht, auf der Vorderseite eine zweite Isolationsschicht und zwischen der ersten Isolationsschicht und der zweiten Isolationsschicht und innerhalb des Siliziums die vergrabenen Isolationsschicht umfasst. In anderen Worten wird also im ersten Schritt besonderes bevorzugt ein Wafer bereitgestellt, dessen Vorderseite und Rückseite mit einer Isolationsschicht versehen sind. Dies vereinfacht die Herstellung des thermischen Emitters und des schallempfindlichen Elementes weiter. Der in Schritt a) bereitgestellte Wafer weist also bevorzugt in einem Schnitt senkrecht zur Ebene beginnend mit der Rückseite die folgende Struktur auf: erste Isolationsschicht - Silizium - vergrabene Isolationsschicht - Silizium - zweite Isolationsschicht.

Alternativ dazu kann in diesem Zusammenhang vorgesehen sein, dass das Verfahren die Schritte Aufbringen einer ersten Isolationsschicht auf der Rückseite des Wafers und/oder Aufbringen einer zweiten Isolationsschicht auf der Vorderseite des Wafers umfasst. Derart wird ausgehend von einem Wafer mit dem Schichtaufbau Silizium - vergrabene Isolationsschicht - Silizium ein Wafer mit dem Schichtaufbau erste Isolationsschicht - Silizium - vergrabene Isolationsschicht - Silizium - zweite Isolationsschicht realisiert.

Die vergrabenen Isolationsschicht hat bevorzugt eine Dicke von 1 - 100 µm. Die erste Isolationsschicht hat bevorzugt eine Dicke von 1 - 2 µm und die zweite Isolationsschicht hat bevorzugt eine Dicke von 1 - 10 µm. Diese Dicken der Isolationsschichten ermöglichen den Gassensor in besonders miniaturisierter Bauweise herzustellen.

Wie bereits erwähnt ist im Hinblick auf die vergrabene Isolationsschicht bevorzugt vorgesehen, dass die vergrabene Isolationsschicht aus einem Material ist, das wenigstens einen Transmissionsgrad von 40% für die zur Detektion des Zielgases verwendete elektromagnetische Strahlung aufweist. Weiter bevorzugt ist die vergrabene Isolationsschicht aus einem Material, das wenigstens einen Transmissionsgrad von 40% für die vom thermischen Emitter emittierte elektromagnetischen Strahlung aufweist. In diesem Zusammenhang ist gemäß einer weiteren bevorzugten Weiterbildung der Erfindung vorgesehen, dass die erste Isolationsschicht, die zweite Isolationsschicht und/oder die vergrabene Isolationsschicht Siliziumdioxid, Siliziumcarbid und/oder Saphir umfasst. Die vergrabene Isolationsschicht wird bevorzugt von Siliziumdioxid und/oder Saphir gebildet. Siliziumdioxid und Saphir weisen den Vorteil auf, dass sie für elektromagnetische Strahlung im IR Bereich optisch transparent sind. Entsprechend kann die vom thermischen Emitter emittierte elektromagnetische Strahlung im IR-Bereich ungehindert von der ersten Kavität in die zweite Kavität dringen. Die erste Isolationsschicht ist bevorzugt aus einem Material, das einen hohen Emissionsgrad in einem zur Detektion des Zielgases verwendete Wellenlängenbereich des elektromagnetischen Spektrums aufweist. Derart ist es besonders einfach einen effizienten thermischen Emitter auf der Rückseite des Wafers zu realisieren. Bevorzugt ist die erste Isolationsschicht aus Siliziumcarbid. Dieses Material hat den Vorteil, dass es einen hohen Emissionsgrad (spektraler Emissionsgrad) im IR Bereich aufweist.

Wie bereits erwähnt bildet die erste Kavität im Gassensor das Messvolumen, das vom zu untersuchenden Gas oder Gasgemisch durchströmbar ist. Die Größe dieses Messvolumens und insbesondere der Abstand zwischen dem thermischen Emitter und der zweiten Kavität - der Detektionskammer - beeinflusst die Sensitivität des Gassensors. In diesem Zusammenhang ist gemäß einer bevorzugten Weiterbildung der Erfindung vorgesehen, dass Schritt a) ein Bereitstellen eines Wafers mit einem Abstand zwischen der vergrabenen Isolationsschicht und der Rückseite von 500 µm bis 2000 µm umfasst. Alternativ ist vorgesehen, dass Schritt a) ein Bereitstellen eines Wafers mit einem Abstand zwischen der vergrabenen Isolationsschicht und der ersten Isolationsschicht von 500 µm bis 2000 µm umfasst. Dies führt jeweils dazu, dass im mit dem Verfahren hergestellten Gassensor zwischen der vergrabenen Isolationsschicht, die das Fenster zur Detektionskammer bildet, und dem thermischen Emitter, ebenfalls ein Abstand zwischen 500 µm bis 2000 µm vorliegt. Dadurch wird ein Gassensor ermöglicht, der eine ausreichend hohe Sensitivität aufweist und zugleich klein genug für viele Anwendungen ist.

In Bezug zu Schritt b) - dem Realisieren des thermischen Emitters - ist gemäß einer bevorzugten Weiterbildung der Erfindung vorgesehen, dass Schritt b) ein Realisieren einer aufgehängten Strahlquelle und/oder einer aufgehängten mikromechanischen Hotplate auf der Rückseite des Wafers umfasst. Eine mikromechanische Hotplate, auch als Micro-hotplate (MHP) bezeichnet, ist ein mikromechanisches Bauteil, das in vielen Sensoren als Heizeinrichtung oder Strahlquelle Verwendung findet. Bevorzugt umfasst die mikromechanische Hotplate eine Heizstruktur, die bevorzugt als mäandrierender Draht auf einer Trägerfläche ausgestaltet ist. Zwischen der Trägerfläche und der vergrabenen Isolationsschicht befindet sich im Gassensor die erste Kavität. Weiter bevorzugt umfasst die mikromechanische Hotplate Stege über die die Trägerfläche der Heizeinrichtung mit dem Wafer verbunden ist.

Gemäß einer weiteren bevorzugten Weiterbildung ist in Zusammenhang mit dem thermischen Emitter zudem vorgesehen, dass Schritt b) ein Realisieren eines IR-Emitters umfasst. Dies ist vorteilhaft, da eine Reihe von Zielgasen im IR-Bereich absorbieren.

Ebenfalls in Zusammenhang mit Schritt b) ist gemäß einer weiteren bevorzugten Weiterbildung der Erfindung vorgesehen, dass der Wafer auf der Rückseite die erste Isolationsschicht umfasst und Schritt b) die folgenden Schritte umfasst:
- Aufbringen einer Heizstruktur auf der ersten Isolationsschicht mittels fotolitografischer Verfahren, und
- Erstellen der ersten Kavität zwischen der ersten Isolationsschicht und der vergrabenen Isolationsschicht im Bereich der aufgebrachten Heizstruktur, mittels chemischer und/oder physikalischer Ätzverfahren.

In anderen Worten bildet also die erste Isolationsschicht bevorzugt die Trägerfläche und die Stege für die Heizstruktur, wobei die Trägerfläche sowie die Stege beim Erstellen der ersten Kavität durch Abtragen von Silizium des Wafers gebildet werden. Besonders bevorzugt ist vorgesehen, dass das Erstellen der ersten Kavität zwischen der ersten Isolationsschicht und der vergrabenen Isolationsschicht im Bereich der aufgebrachten Heizstruktur ein partielles Entfernen der ersten Isolationsschicht neben der aufgebrachten Heizstruktur besonders bevorzugt durch reaktives Ionenätzen der Rückseite des Wafers und ein darauffolgendes nasschemisches Ätzen des Siliziums des Wafers zwischen der ersten Isolationsschicht und der vergrabenen Isolationsschicht im Bereich der aufgebrachten Heizstruktur umfasst. Wie bereits erwähnt ist besonders vorteilhaft am Verfahren, dass beim darauffolgenden nasschemischen Ätzen die vergrabene Isolationsschicht als Ätzstopp fungiert. Derart wird also die erste Kavität realisiert, die sich bis zur vergrabenen Isolationsschicht erstreckt.

Reaktives Ionenätzen (RIE: reactive ion etch) ist ein Ätzverfahren bei dem mittels reaktiver Ionen, die in einer Gasentladung erzeugt werden, geätzt wird. Beim RIE wirken eine physikalische Komponente, nämlich der Abtrag durch Herausschlagen von Teilchen, sowie eine chemische Komponente, nämlich der Abtrag durch chemische Reaktion, beim Abtragprozess zusammen.

Beim nasschemischen Ätzen werden Ätzlösungen beispielsweise Kalilauge (KOH) verwendet, um mittels chemischer Reaktion ein Abtragprozess zu erreichen. Der Ätzprozess kann Richtungsabhängig sein, wodurch unterschiedliche Strukturen realisiert werden können.

In Zusammenhang mit Schritt c) - dem Realisieren des schallempfindlichen Elementes - ist gemäß einer weiteren bevorzugten Weiterbildung der Erfindung vorgesehen, dass Schritt c) ein Realisieren eines Mikrofons, in das das Zielgas eingeschlossen ist, auf der Vorderseite des Wafers umfasst. Bevorzugt handelt es sich dabei um ein Kondensatormikrofon in Mikrosystemtechnik (MEMS-Mikrofon), bei dem die die elektrische Kapazität ändernde Mikromembran direkt auf dem Wafer realisiert wird.

Ebenfalls in Zusammenhang mit Schritt c) ist gemäße einer weiteren bevorzugten Weiterbildung der Erfindung vorgesehen, dass der Wafer auf der Vorderseite die zweite Isolationsschicht umfasst und Schritt c) die folgenden Schritte umfasst:
- Partielles Entfernen der zweiten Isolationsschicht mittels chemischer und/oder physikalischer Ätzverfahren,
- Aufbringen einer Abschlussplatte auf der Vorderseite des Wafers mittels fotolitografischer Verfahren, wobei die Abschlussplatte im Bereich der entfernten zweiten Isolationsschicht eine gelöcherte Struktur aufweist,
- Erstellen der zweiten Kavität zwischen der Abschlussplatte und der vergrabenen Isolationsschicht im Bereich der gelöcherten Struktur mittels chemischer Ätzverfahren, und
- Versiegeln der zweiten Kavität unter Zielgasatmosphäre durch Aufbringen einer Versiegelungslage auf der Abschlussplatte unter Zielgasatmosphäre.

Besonders bevorzugt wird auf der Vorderseite in einem Bereich der mit der aufgebrachten Heizstruktur und/oder mit dem aufgehängten thermischen Emitter auf der Rückseite korrespondiert die zweite Isolationsschicht entfernt. In anderen Worten wird also bevorzugt die zweite Isolationsschicht gegenüber der Heizstruktur und/oder gegenüber dem thermischen Emitter entfernt. Derart wird das schallempfindliche Element direkt gegenüber der ersten Kavität realisiert und somit sichergesellt, dass die erste Kavität und die zweite Kavität lediglich durch die vergrabene Isolationsschicht voneinander getrennt sind. Beim Realisieren des schallempfindlichen Elementes dient bevorzugt die zweite Isolationsschicht sowie das partiell freigelegte Silizium des Wafers zunächst als Träger für die Abschlussplatte, die im Bereich der entfernten zweiten Isolationsschicht eine gelöcherte Struktur aufweist und derart bevorzugt das Mikrofondiaphragma bildet.

Daraufhin wird bevorzugt das als Träger dienende Silizium des Wafers unter der gelöcherten Struktur weggeätzt, wodurch die zweite Kavität entsteht. Um das Zielgas in die zweite Kavität einzubringen, wird bevorzugt unter Zielgasatmosphäre auf die Abschlussplatte und somit auch auf die zweite Kavität die Versiegelungslage aufgebracht.

Besonders bevorzugt ist vorgesehen, dass beim Erstellen der zweiten Kavität mittels chemischer Ätzverfahren, insbesondere nasschemischem Ätzen, die vergrabene Isolationsschicht als Ätzstopp fungiert. Derart kann einfach sichergestellt werden, dass die zweite Kavität durch die Isolationsschicht von der ersten Kavität getrennt ist.

Wie bereits erwähnt betrifft die Erfindung auch den photoakustischen Gassensor. Der photoakustische Gassensor für das Zielgas umfasst den thermischen Emitter, das als erste Kavität ausgestaltete Messvolumen, und das schallempfindliches Element, wobei das Messvolumen von dem zu untersuchenden Gas durchströmbar ist, wobei das schallempfindliche Element die zweite Kavität umfasst, in die das Zielgas eingeschlossen ist, und wobei die erste Kavität und die zweite Kavität lediglich durch die vergrabene Isolationsschicht des zur Herstellung verwendeten Wafers aus Silizium voneinander getrennt sind.

Im Gegensatz zu Gassensoren, die durch Verbinden mehrerer Wafer hergestellt werden, ist der erfindungsgemäße photoakustische Gassensor ein Gassensor in monolithischer Bauweise. Dabei weist der photoakustische Gassensor zwischen der ersten Kavität und der zweiten Kavität lediglich die vergrabene Isolationsschicht auf.

Zudem ist gemäß einer bevorzugten Weiterbildung vorgesehen, dass zwischen der ersten Kavität und der zweiten Kavität keine Klebeschicht vorhanden ist. Stattdessen bildet die vergrabene Isolationsschicht einerseits die Trennstruktur zwischen der ersten Kavität und der zweiten Kavität und sorgt zugleich als inhärenter Bestandteil des Wafers für den monolithischen Aufbau des photoakustischen Gassensors.

Nachfolgend wird die Erfindung anhand eines bevorzugten Ausführungsbeispiels der Erfindung unter Bezugnahme auf die Zeichnungen weiter im Detail beschreiben.

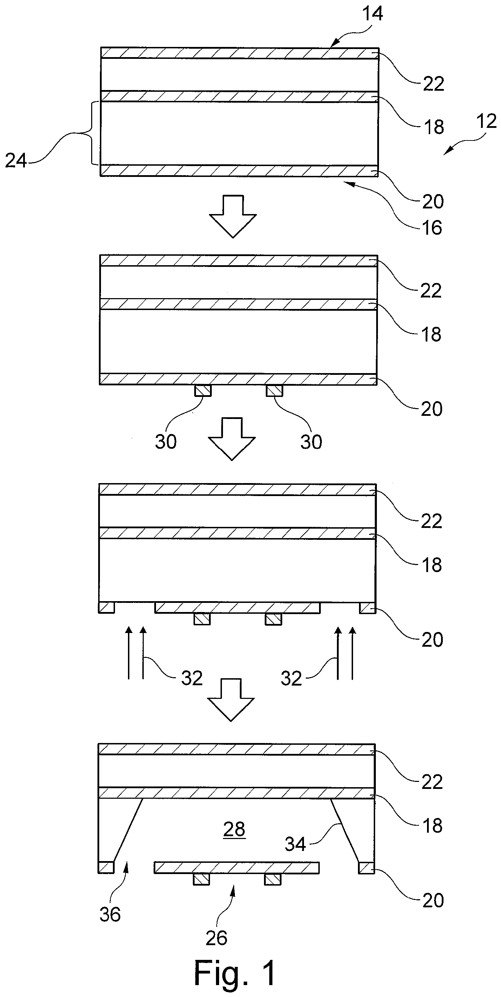

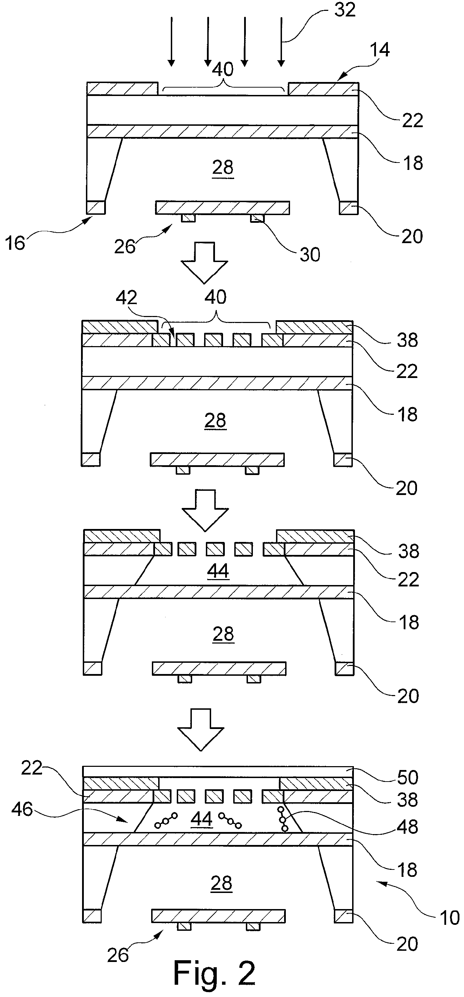

In den Zeichnungen zeigt
- Fig. 1 und 2: schematische Darstellungen der Schritte eines Verfahrens zur Herstellung eines photoakustischen Gassensors, gemäß einem bevorzugten Ausführungsbeispiel der Erfindung.

In den Figuren 1 und 2 sind schematisch die Schritte zur Herstellung eines photoakustischen Gassensors 10 gezeigt. Im vorliegenden Ausführungsbeispiel handelt es sich um einen CO₂ Mikrosensor 10 mit einem monolithischen Aufbau.

Im ersten Schritt des Verfahrens wird ein Wafer 12 aus Silizium bereitgestellt, der in Figur 1 ganz oben abgebildet ist. Der Wafer 12 weist eine Vorderseite 14 und eine Rückseite 16 auf. Zudem weist der Wafer 12 innerhalb des Siliziums eine vergrabene Isolationsschicht 18 auf. Der in diesem bevorzugten Ausführungsbeispiel bereitgestellte Wafer 12 ist ein SOI-Wafer 12, der zudem auf seinen Oberflächen, also der Vorderseite 14 und der Rückseite 16 jeweils noch eine weitere Isolationsschicht 20, 22 aufweist. Vorliegend weist der bereitgestellte Wafer 12 also auf der Rückseite 16 die erste Isolationsschicht 20, und auf der Vorderseite 14 die zweite Isolationsschicht 22 auf, sowie zwischen der ersten Isolationsschicht 20 und der zweiten Isolationsschicht 22 und innerhalb des Siliziums die vergrabenen Isolationsschicht 18. Zudem handelt es sich bei dem im vorliegenden Ausführungsbeispiel bereitgestellten Wafer 12 um einen {100}Si-Wafer, was bedeutet, dass die Vorderseite 14 und Rückseite 16 des Wafers 12 von der Kristallebene { 100} gebildet wird.

Die Isolationsschichten 18, 20 und 22 des Wafers 12 sind vorliegend alle aus Siliziumdioxid. Zudem beträgt ein Abstand 24 zwischen der ersten Isolationsschicht 20 und der vergrabenen Isolationsschicht 22 vorliegend 1000 µm. Die erste Isolationsschicht 20 ist vorliegend 1,5 µm dick und die zweite Isolationsschicht ist vorliegend 5 µm dick, während die vergrabene Isolationsschicht 18 eine Dicke von 30 µm aufweist.

Im zweiten Schritt des Verfahrens wird auf der Rückseite 16 des Wafers 12 ein aufgehängter thermischer Emitter 26 umfassend eine erste Kavität 28 realisiert. Vorliegend ist der aufgehängte thermischer Emitter 26 als Micro-hotplate 26 ausgeführt, die elektromagnetische Strahlung im IR Bereich emittiert. Die erste Kavität 28 erstreckt sich vom thermischen Emitter 26 bis zur vergrabenen Isolationsschicht 18. Der nach diesem Verfahrensschritt realisierte thermische Emitter 26 ist in Figur 1 ganz unten dargestellt, während die Figuren dazwischen die Zwischenschritte, wie der thermische Emitter 26 mittels fotolitografischer Verfahren und Ätzverfahren realisiert wird, schematisch darstellen.

Im vorliegenden bevorzugten Ausführungsbeispiel der Erfindung wird der thermische Emitter 26 und die erste Kavität 28 realisiert, indem auf der ersten Isolationsschicht 20 mittels fotolitografischer Verfahren eine Heizstruktur 30 aufgebracht wird. Danach wird neben der aufgebrachten Heizstruktur 30 durch reaktives Ionenätzen, das mit den Pfeilen 32 symbolisch in Figur 1 dargestellt ist, die erste Isolationsschicht 20 partiell entfernt. Derart wird das Silizium des Wafers 12 freigelegt. Das freigelegte Silizium wird daraufhin im Bereich der aufgebrachten Heizstruktur 30 durch nasschemisches Ätzen mittels Kalilauge abgetragen, wodurch die erste Kavität 28 erstellt wird. Die vergrabene Isolationsschicht 18 dient beim nasschemischen Ätzvorgang direkt als Ätzstopp. Die erste Kavität 18 weist aufgrund des anisotropen Ätzvorganges schräge Seitenwände 34 auf, die durch die Kristallebene {111} des Siliziums des Wafers 12 gebildet werden. Zudem weist die erste Kavität 28 wenigstens zwei Öffnungen 36 auf, nämlich an den Stellen an der die erste Isolationsschicht 20 partiell entfernt wurde. Diese Öffnungen 36 ermöglichen, dass im mit dem Verfahren hergestellten Gassensor 10, das zu untersuchende Gas und/oder Gasgemisch in die erste Kavität 28 einströmen kann, so dass die erste Kavität 28 im Gassensor 10 die Funktion des Messvolumens übernehmen kann. Nach dem zweiten Verfahrensschritt ist also auf der Rückseite16 des Wafers 12 der thermische Emitter 26 und die erste Kavität 28 realisiert (Figur 1 ganz unten).

Im darauffolgenden dritten Verfahrensschritt wird die Vorderseite 14 des Wafers 12 bearbeitet, was in Figur 2 dargestellt ist. Ziel der weiteren Schritte ist ein schallempfindliches Element 46 umfassend eine zweite Kavität 44 auf der Vorderseite 14 zu realisieren, wobei in die zweite Kavität 44 das Zielgas 48 - vorliegend CO₂ - eingebracht ist (Figur 2 ganz unten).

Um dies zu erreichen wird in einem Bereich 40 auf der Vorderseite 14 des Wafers 12, der im Wesentlichen mit dem Bereich des auf der Rückseite 16 aufgehängten thermischen Emitters 26 korrespondiert, die zweite Isolationsschicht 22 mittels reaktivem Ionenätzen 32 entfernt (Figur 2 ganz oben). Auf dem freigelegten Silizium des Wafers 12, sowie auf der noch vorhandenen zweiten Isolationsschicht 22 wird daraufhin mittels fotolitografischer Verfahren eine Abschlussplatte 38 aufgebracht, die im Bereich 40 der entfernten zweiten Isolationsschicht 22 eine gelöcherte Struktur 42 aufweist.

Im Weiteren wird im Bereich 40 die zweite Kavität 44 realisiert, indem durch nasschemisches Ätzen mittels Kalilauge das Silizium des Wafers 12 bis auf die vergrabene Isolationsschicht 18 abgetragen wird. Analog zum nasschemischen Ätzen beim Bearbeiten der Rückseite 16 des Wafers 12 im zweiten Verfahrensschritt, dient auch vorliegend beim Bearbeiten der Vorderseite 14 des Wafers 12 die vergrabene Isolationsschicht 18 als Ätzstopp. Entsprechend sind die erste Kavität 28 und die zweite Kavität 44 lediglich noch durch die vergrabene Isolationsschicht 18 voneinander getrennt.

Zur Realisierung des schallempfindlichen Elementes 46 wird schlussendlich unter einer Atmosphäre des Zielgases 48 - vorliegend CO₂ - die zweite Kavität 44 durch Aufbringen einer Versiegelungslage 50 auf der Abschlussplatte 38 versiegelt. Derart kann der Mikrosensor 10 mit Abmessungen von 2x2 mm², in monolithischer Bauart, also ausgehend von genau einem Wafer 12 und ohne dass mehrere Wafer miteinander verbunden werden durch das Verfahren bereitgestellt werden.

### Bezugszeichenliste

- 10: Gassensor, CO₂ Sensor
- 12: Silizium Wafer
- 14: Vorderseite
- 16: Rückseite
- 18: vergrabene Isolationsschicht
- 20: erste Isolationsschicht
- 22: zweite Isolationsschicht
- 24: Abstand zwischen erster Isolationsschicht und vergrabener Isolationsschicht
- 26: thermischer Emitter
- 28: erste Kavität, Messvolumen
- 30: Heizstruktur
- 32: reaktives Ionenätzen, Pfeil
- 34: Seitenwand, Kristallebene {111}
- 36: Öffnung
- 38: Abschlussplatte
- 40: Bereich korrespondierend zu thermischem Emitter
- 42: Löcher in Abschlussplatte, gelöcherte Struktur
- 44: zweite Kavität
- 46: schallempfindliches Element
- 48: Zielgas, CO₂
- 50: Versiegelungslage

## Patentansprüche

1. Verfahren zum Herstellen eines photoakustischen Gassensors (10) für ein Zielgas (48) umfassend die Schritte
a) Bereitstellen eines Wafers (12) aus Silizium aufweisend eine Vorderseite (14) und eine Rückseite (16), wobei der Wafer (12) innerhalb des Siliziums eine vergrabene Isolationsschicht (18) umfasst,
b) Realisieren eines aufgehängten thermischen Emitters (26) umfassend eine erste, ein Messvolumen bildende und von dem zu untersuchenden Gas und/oder Gasgemisch durchströmbare,
Kavität (28) auf der Rückseite (16) des Wafers (12),
c) Realisieren eines schallempfindlichen Elementes (46) auf der Vorderseite (14) des Wafers (12), wobei das schallempfindliche Element (46) eine zweite Kavität (44) umfasst, in die das Zielgas (48) eingeschlossen ist,
wobei die Schritte b) und c) derart mittels fotolitografischer Verfahren und Ätzverfahren umgesetzt werden, dass die erste Kavität (28) und die zweite Kavität (44) lediglich durch die vergrabene Isolationsschicht (18) voneinander getrennt sind.

2. Verfahren nach Anspruch 1, wobei Schritt a) ein Bereitstellen eines Silicon-on-Insulator Wafers (12) und/oder ein Bereitstellen eines {100}Si-Wafers umfasst und/oder wobei der in Schritt a) bereitgestellte Wafer (12) auf der Rückseite (16) eine erste Isolationsschicht (20), auf der Vorderseite (14) eine zweite Isolationsschicht (22) und zwischen der ersten Isolationsschicht (20) und der zweiten Isolationsschicht (22) und innerhalb des Siliziums die vergrabene Isolationsschicht (18) umfasst.

3. Verfahren nach einem der vorhergehenden Ansprüche, wobei die erste Isolationsschicht (20), die zweite Isolationsschicht (22) und/oder die vergrabene Isolationsschicht (18) Siliziumdioxid, Siliziumcarbid und/oder Saphir umfasst.

4. Verfahren nach einem der vorhergehenden Ansprüche, wobei Schritt a) ein Bereitstellen eines Wafers (12) mit einem Abstand (24) zwischen der vergrabenen Isolationsschicht (18) und der Rückseite (16) von 500 µm bis 2000 µm umfasst, oder wobei Schritt a) ein Bereitstellen eines Wafers (12) mit einem Abstand (24) zwischen der vergrabenen Isolationsschicht (18) und der ersten Isolationsschicht (20) von 500 µm bis 2000 µm umfasst.

5. Verfahren nach einem der vorhergehenden Ansprüche, wobei Schritt b) ein Realisieren einer aufgehängten Strahlquelle und/oder einer aufgehängten mikromechanischen Hotplate (26) auf der Rückseite (16) des Wafers (12) umfasst.

6. Verfahren nach einem der vorhergehenden Ansprüche, wobei Schritt b) ein Realisieren eines IR-Emitters umfasst.

7. Verfahren nach einem der vorhergehenden Ansprüche wobei der in Schritt a) bereitgestellte Wafer (12) auf der Rückseite (16) eine erste Isolationsschicht (20) umfasst und Schritt b) die folgenden Schritte umfasst:
- Aufbringen einer Heizstruktur (30) auf der ersten Isolationsschicht (20) mittels fotolitografischer Verfahren, und
- Erstellen der ersten Kavität (28) zwischen der ersten Isolationsschicht (20) und der vergrabenen Isolationsschicht (18) im Bereich der aufgebrachten Heizstruktur, mittels chemischer und/oder physikalischer Ätzverfahren.

8. Verfahren nach einem der vorhergehenden Ansprüche wobei Schritt c) ein Realisieren eines Mikrofons, in das das Zielgas (48) eingeschlossen ist, auf der Vorderseite (14) des Wafers (12) umfasst.

9. Verfahren nach einem der vorhergehenden Ansprüche, wobei der in Schritt a) bereitgestellte Wafer (12) auf der Vorderseite (14) eine zweite Isolationsschicht (22) umfasst und Schritt c) die folgenden Schritte umfasst:
- Partielles Entfernen der zweiten Isolationsschicht (22) mittels chemischer und/oder physikalischer Ätzverfahren,
- Aufbringen einer Abschlussplatte (38) auf der Vorderseite (14) des Wafers (12) mittels fotolitografischer Verfahren, wobei die Abschlussplatte (38) im Bereich (40) der entfernten zweiten Isolationsschicht (22) eine gelöcherte Struktur (42) aufweist,
- Erstellen der zweiten Kavität (44) zwischen der Abschlussplatte (38) und der vergrabenen Isolationsschicht (18) im Bereich (40) der gelöcherten Struktur (42) mittels chemischer Ätzverfahren, und
- Versiegeln der zweiten Kavität (44) unter Zielgasatmosphäre durch Aufbringen einer Versiegelungslage (50) auf der Abschlussplatte (38) unter Zielgasatmosphäre.

10. Photoakustischer Gassensor (10) für ein Zielgas (48) umfassend einen thermischen Emitter (26), der ein als erste Kavität (28) ausgestaltetes Messvolumen (28) umfasst, und ein schallempfindliches Element (46), wobei das Messvolumen (28) von einem zu untersuchenden Gas und/oder Gasgemisch durchströmbar ist, und wobei das schallempfindliche Element (46) eine zweite Kavität (44) umfasst, in die das Zielgas (48) eingeschlossen ist, und wobei die erste Kavität (28) und die zweite Kavität (44) lediglich durch eine vergrabene Isolationsschicht (18) eines zur Herstellung verwendeten Wafers (12) aus Silizium voneinander getrennt sind.

11. Photoakustischer Gassensor (10) nach Anspruch 10, wobei zwischen der ersten Kavität (28) und der zweiten Kavität (44) keine Klebeschicht vorhanden ist.

## Claims

1. Method for producing a photoacoustic gas sensor (10) for a target gas (48) comprising the steps of
a) providing a wafer (12) made of silicon and comprising a front side (14) and a rear side (16), wherein the wafer (12) comprises a buried insulation layer (18) within the silicon;
b) realizing a suspended thermal emitter (26) comprising a first cavity (28) which is disposed at the rear side (16) of the wafer (12) and forms a measuring volume and through which the gas and/or gas mixture to be examined can flow;
c) realizing a sound-sensitive element (46) at the front side (14) of the wafer (12), wherein the sound-sensitive element (46) comprises a second cavity (44) in which the target gas (48) is enclosed,
wherein steps b) and c) are realized by means of photolithographic and etching processes such that the first cavity (28) and the second cavity (44) are separated from each other only by the buried insulation layer (18).

2. Method according to claim 1, wherein step a) comprises providing a silicon-on-insulator wafer (12) and/or providing a {100} Si wafer and/or wherein the wafer (12) provided in step a) comprises a first insulation layer (20) on the rear side (16), a second insulation layer (22) on the front side (14), and the buried insulation layer (18) within the silicon between the first insulation layer (20) and the second insulation layer (22).

3. Method according to any one of the preceding claims, wherein the first insulation layer (20), the second insulation layer (22) and/or the buried insulation layer (18) comprises silicon dioxide, silicon carbide and/or sapphire.

4. Method according to any one of the preceding claims, wherein step a) comprises providing a wafer (12) with a distance (24) between the buried insulation layer (18) and the rear side (16) of 500 µm to 2000 µm, or wherein step a) comprises providing a wafer (12) with a distance (24) between the buried insulation layer (18) and the first insulation layer (20) of 500 µm to 2000 µm.

5. Method according to any one of the preceding claims, wherein step b) comprises realizing a suspended beam source and/or a suspended micromechanical hotplate (26) at the rear side (16) of the wafer (12).

6. Method according to any one of the preceding claims, wherein step b) comprises realizing an IR emitter.

7. Method according to any one of the preceding claims, wherein the wafer (12) provided in step a) comprises a first insulation layer (20) at the rear side (16) and step b) comprises the following steps:
applying a heating structure (30) on the first insulation layer (20) by means of photolithographic processes; and
creating the first cavity (28) between the first insulation layer (20) and the buried insulation layer (18) in the area of the applied heating structure by means of chemical and/or physical etching processes.

8. Method according to any one of the preceding claims, wherein step c) comprises realizing a microphone in which the target gas (48) is enclosed at the front side (14) of the wafer (12).

9. Method according to any one of the preceding claims, wherein the wafer (12) provided in step a) comprises a second insulation layer (22) at the front side (14) and step c) comprises the following steps:
partially removing the second insulation layer (22) by means of chemical and/or physical etching processes;
applying an end plate (38) to the front side (14) of the wafer (12) by means of photolithographic processes, wherein the end plate (38) has a perforated structure (42) in the area (40) of the removed second insulation layer (22);
creating the second cavity (44) between the end plate (38) and the buried insulation layer (18) in the area (40) of the perforated structure (42) by means of chemical etching processes; and
sealing the second cavity (44) under a target gas atmosphere by applying a sealing layer (50) to the end plate (38) under the target gas atmosphere.

10. Photoacoustic gas sensor (10) for a target gas (48), comprising a thermal emitter (26), which comprises a measuring volume (28) configured as a first cavity (28), and a sound-sensitive element (46), wherein a gas and/or a gas mixture to be examined can flow through the measuring volume (28), and wherein the sound-sensitive element (46) comprises a second cavity (44), in which the target gas (48) is enclosed, and wherein the first cavity (28) and the second cavity (44) are separated from one another only by a buried insulation layer (18) of a wafer (12) of silicon used for the manufacture.

11. Photoacoustic gas sensor (10) according to claim 10, wherein there is no adhesive layer between the first cavity (28) and the second cavity (44).

## Revendications

1. Procédé de fabrication d'un capteur de gaz photoacoustique (10) pour un gaz cible (48), comprenant les étapes
a) préparation d'une tranche (12) en silicium présentant une face avant (14) et une face arrière (16), où la tranche (12) comprend une couche d'isolation (18) enfouie à l'intérieur du silicium,
b) réalisation d'un émetteur (26) thermique suspendu comprenant une première cavité (28) formant un volume de mesure et pouvant être traversée par le gaz ou le mélange gazeux à examiner, sur la face arrière (16) de la tranche (12),
c) réalisation d'un élément sensible aux sons (46) sur la face avant (14) de la tranche (12), où l'élément sensible aux sons (46) comprend une deuxième cavité (44) dans laquelle le gaz cible (48) est enfermé,
dans lequel les étapes b) et c) sont mises en oeuvre au moyen d'un procédé photolithographique et d'un procédé de gravure de telle manière que la première cavité (28) et la deuxième cavité (44) soient seulement séparées l'une de l'autre par la couche d'isolation (18) enfouie.

2. Procédé selon la revendication 1, dans lequel l'étape a) comprend la préparation d'une tranche silicium sur isolant (12), et/ou la préparation d'une tranche {100}Si, et/ou dans lequel la tranche (12) préparée dans l'étape a) comprend, sur la face arrière (16), une première couche d'isolation (20), sur la face avant (14), une deuxième couche d'isolation (22) et entre la première couche d'isolation (20) et la deuxième couche d'isolation (22), et à l'intérieur du silicium, la couche d'isolation (18) enfouie.

3. Procédé selon l'une des revendications précédentes, dans lequel la première couche d'isolation (20), la deuxième couche d'isolation (22) et/ou la couche d'isolation (18) enfouie comprennent du dioxyde de silicium, du carbure de silicium et/ou du saphir.

4. Procédé selon l'une des revendications précédentes, dans lequel l'étape a) comprend la préparation d'une tranche (12) avec une distance (24) entre la couche d'isolation (18) enfouie et la face arrière (16) de 500 µm à 2000 µm, ou dans lequel l'étape a) comprend la préparation d'une tranche (12) avec une distance (24) entre la couche d'isolation (18) enfouie et la première couche d'isolation (20) de 500 µm à 2000 µm.

5. Procédé selon l'une des revendications précédentes, dans lequel l'étape b) comprend la réalisation d'une source de rayonnement suspendue et/ou d'une plaque chauffante (26) micromécanique suspendue sur la face arrière (16) de la tranche (12).

6. Procédé selon l'une des revendications précédentes, dans lequel l'étape b) comprend la réalisation d'un émetteur IR.

7. Procédé selon l'une des revendications précédentes, dans lequel la tranche (12) préparée dans l'étape a) comprend une première couche d'isolation (20) sur la face arrière (16) et l'étape b) comprend les étapes suivantes :
- l'installation d'une structure de chauffage (30) sur la première couche d'isolation (20) au moyen d'un procédé photolithographique, et
- la création de la première cavité (28) entre la première couche d'isolation (20) et la couche d'isolation (18) enfouie dans la zone de la structure de chauffage installée, au moyen de procédés de gravure chimiques et/ou physiques.

8. Procédé selon l'une des revendications précédentes, dans lequel l'étape c) comprend la réalisation d'un microphone dans lequel le gaz cible (48) est renfermé sur la face avant (14) de la tranche (12).

9. Procédé selon l'une des revendications précédentes, dans lequel la tranche (12) préparée dans l'étape a) comprend une deuxième couche d'isolation (22) sur la face avant (14) et l'étape c) comprend les étapes suivantes :
- le retrait partiel de la deuxième couche d'isolation (22) au moyen de procédés de gravure chimiques et/ou physiques,
- la mise en place d'une plaque finale (38) sur la face avant (14) de la tranche (12) au moyen de procédés photolithographiques, où la plaque finale (38) présente une structure trouée (42) dans la zone (40) de la deuxième couche d'isolation (22) éloignée,
- la création de la deuxième cavité (44) entre la plaque finale (38) et la couche d'isolation (18) enfouie dans la zone (40) de la structure trouée (42) au moyen de procédés de gravure chimiques, et
- le scellement de la deuxième cavité (44) sous l'atmosphère de gaz cible par la mise en place d'une couche de scellement (50) sur la plaque finale (38) sous une atmosphère de gaz cible.

10. Capteur de gaz photoacoustique (10) pour un gaz cible (48) comprenant un émetteur thermique (26) qui comprend un volume de mesure (28) conçu sous forme d'une première cavité (28) et un élément sensible aux sons (46), où le volume de mesure (28) peut être traversé par un gaz et/ou un mélange gazeux à examiner, et
dans lequel l'élément sensible aux sons (46) comprend une deuxième cavité (44) dans laquelle est enfermé le gaz cible (48), et dans lequel la première cavité (28) et la deuxième cavité (44) sont seulement séparées l'une de l'autre par une couche d'isolation (18) enfouie d'une tranche (12) en silicium employée pour la fabrication.

11. Capteur de gaz photoacoustique (10) selon la revendication 10, dans lequel aucune couche adhésive n'est présente entre la première cavité (28) et la deuxième cavité (44).
